Europäisches Patentamt

European Patent Office

Office européen des brevets

(11) Publication number: **0 369 472**

**A2**

(12) # EUROPEAN PATENT APPLICATION

(21) Application number: **89121326.6**

(22) Date of filing: **17.11.89**

(51) Int. Cl.⁵: **G11B 20/00, G11B 20/10**

(30) Priority: **17.11.88 JP 288932/88**

(43) Date of publication of application:
**23.05.90 Bulletin 90/21**

(84) Designated Contracting States:
**DE FR GB**

(71) Applicant: **MITSUBISHI DENKI KABUSHIKI KAISHA**
**2-3, Marunouchi 2-chome Chiyoda-ku Tokyo(JP)**

(72) Inventor: **Fujio, Kazuyoshi c/o Itami Seisakusho**
**Mitsubishi Denki K.K. 1-1, Tsukaguchi-Hommachi**
**8-Chome Amagasaki-Shi Hyogo-Ken(JP)**
Inventor: **Furukawa, Teruo c/o Sangyo Shisutemu Kenkyusho**
**Mitsubishi Denki K.K. 1-1, Tsukaguchi-Hommachi**
**8-Chome Amagasaki-Shi Hyogo-Ken(JP)**

(74) Representative: **Betten & Resch**
**Reichenbachstrasse 19**
**D-8000 München 5(DE)**

(54) **Signal processing circuit.**

(57) A signal processing circuit for converting analog signals of regenerated data from a recording medium, including a header for the following data, into pulse signals, which samples amplitude of the regenerated signals at the header, judges whether the sampled amplitudes are within a prescribed range or not, and only when the sampled amplitudes being judged to be within a prescribed range, gives a control signal to an amplifier to amplify the amplitudes of the regenerated signals by such a gain as to make a peak-to-peak amplitude of the sampled amplitudes at the header be a fixed value.

Fig. 7

## SIGNAL PROCESSING CIRCUIT

BACKGROUND OF THE INVENTION

Field of the Invention

This invention relates to a signal processing circuit for detecting data from a recording medium, especially one for preventing actuation of the AGC amplifier when amplitudes of regenerated signals of the signal processing circuit become abnormal.

Description of Related Art

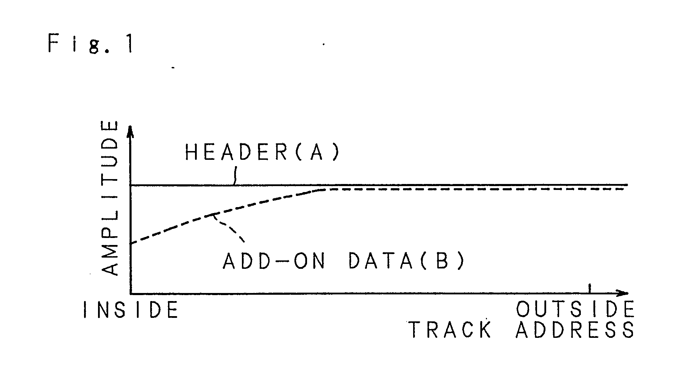

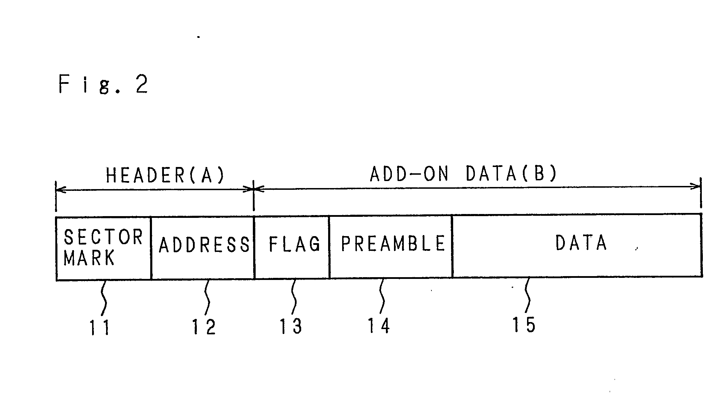

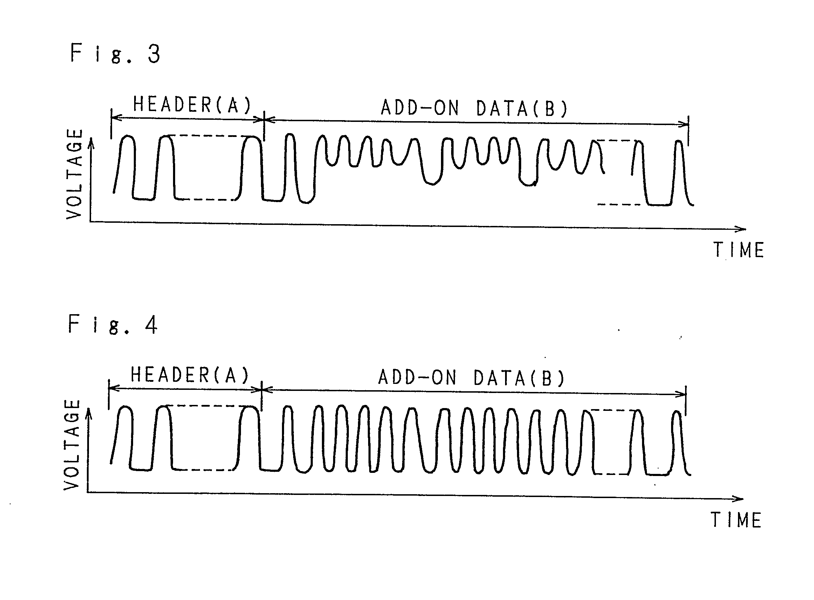

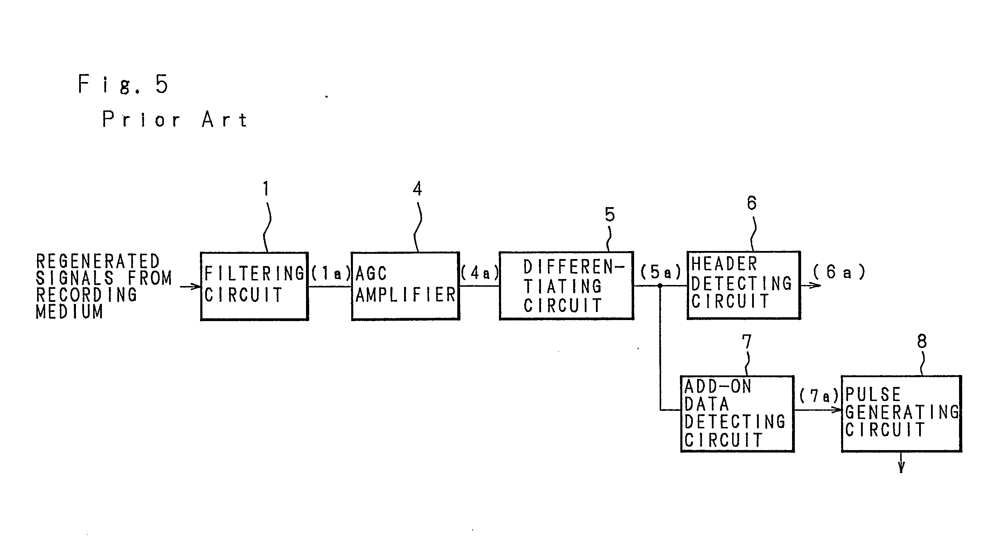

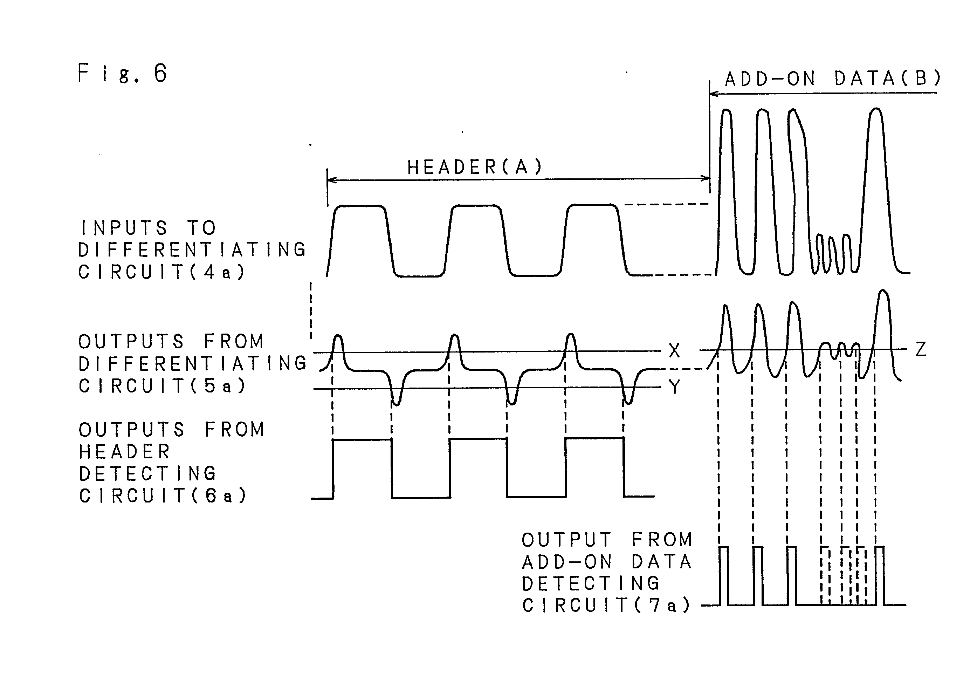

Figures 1 through 6 are drawings for disclosing a conventional art, where Fig. 1 is a drawing showing amplitudes of regenerated signals at headers and add-on data from inside to outside circumferences of a recording medium, Fig. 2 represents a composition chart of a general recording format of a sector when recording add-on data in a recording medium. Figs. 3 and 4 are waveform charts indicating examples of regenerated signals at inside and outside circumferences of an optical recording medium. Fig. 5 is a block diagram showing a construction of a conventional signal processing circuit introduced in "Nikkei Electronics" on page 224 of the February 1987 issue. Fig. 6 is a waveform chart indicating waveforms of signals at various parts in Fig. 5.

In the sector recording format shown in Fig. 2, 11 is a sector mark of synchronization for each sector, 12 is an address consisting of track and sector addresses of the recording medium (not shown in the figure), 13 is a flag where recorded data whether a sector concerned is recorded or not and 14 is a preamble provided for an automatic phase control circuit (not shown in the figure) extracting clock component from data 15 to be recorded, to pull frequency and phase in a short time. Generally, this preamble 15 is recorded in a maximum frequency among frequency components in the data 15.

The sector mark 11 and the address 12 are recorded in a recording medium beforehand, which is called a header A. Further, the flag 13, the preamble 14 and the data 15 are called add-on data B as these are not recorded in the recording medium beforehand, but recorded afterwards by a recording and regenerating unit (not shown in the figure).

Fig. 3 indicates regenerated signals at the header A and add-on data B in inside circumference of the recording medium and Fig. 4 shows regenerated signals at the header A and add-on data B in outside circumference of the recording medium.

Fig. 1 shows amplitudes of regenerated signals at the header A and the add-on data B from inside to outside circumference of the recording medium.

In the conventional signal processing circuit indicated in Fig. 5, 1 is a filtering circuit to exclude noise which is out of a required band in regenerated analog signals from a recording medium, 4 represents an AGC amplifier to amplify amplitudes of the regenerated signals from the filtering circuit 1 up to a prescribed level, 5 is a differentiating circuit to differentiate outputs from the AGC amplifier 4, 6 is a header detecting circuit to detect data points from the regenerated signals at the header A out of outputs from the differentiating circuit 5, 7 is an add-on data detecting circuit to detect data points from the regenerated signals at the add-on data B out of outputs from the differentiating circuit 5, and 8 represents a pulse generating circuit to generate corresponding pulses to the data points detected by the add-on data detecting circuit 7.

The conventional signal processing circuit is composed as above, where the regenerated signals from the recording medium are inputted to the filtering circuit 1 to exclude noise frequency components being out of a required band. The outputs 1a from this filtering circuit 1 are inputted to the AGC amplifier 4 in the next stage where the regenerated signals are amplified as to make a peak-to-peak amplitude of the regenerated signals at the header A be a prescribed value. This is because as shown in the composition chart of the sector recording format in Fig. 2, the waveform charts of the regenerated signals at the header A and the add-on data B in inside circumference of the recording medium in Fig. 3, and those in outside in Fig. 4, this amplification control is conducted to achieve the prescribed constant value level by absorbing changes in amplitudes of regenerated signals according to a regenerated track address of the recording medium or other reasons.

Now reverting to Fig. 5, the outputs 4a from the AGC amplifier 4 are differentiated in the differentiating circuit 5 in the next stage and the outputs 5a turn into signals described in a waveform as indicated in Fig. 6. These outputs 5a are inputted to the header detecting circuit 6 and in the add-on data detecting circuit 7 connected in series thereto. As it is clear from the outputs 5a of the differentiating circuit 5 and the outputs 6a of the header detecting circuit 6 in Fig. 6, the header detecting circuit 6 has the first comparative level X and the second comparative level Y, and the outputs 6a are generated by flip-flop movement which reverses each time when the outputs 5a at the header A generated by the differentiating circuit 5 alternately exceed the first comparative level X and the second comparative level Y in their peaks. Namely, these outputs 6a are square-wave digital signals having both edges of the waveform of the regenerated signals at the header A as the data points. On the other hand, as it is clear from the outputs 5a of the differentiating circuit 5 and the outputs 7a of the add-on data detecting circuit 7 in Fig. 6, the add-on data detecting circuit 7 has a comparative level Z and generates the outputs 7a by a one-shot movement when an output 5a of the differentiating circuit 5 exceeds the comparative level Z. Namely, these outputs 7a are the digital signals having peaks of the waveform of the regenerated signals at the add-on data B as the data points.

The outputs 7a from the add-on data detecting circuit 7 are inputted to the pulse generating circuit 8 in the next stage, where spurious pulses caused by noise contained in the outputs 7a are excluded. (The spurious pulses are shown in Fig. 6 by dotted line in the outputs 7a from the add-on data detecting circuit 7.)

In the conventional signal processing circuit, there has been provided no protective measure when the amplitudes of the regenerated signals at the header, to which an automatic gain control is applied, becomes abnormal due to a defect in the recording medium, etc. On this account, the following add-on data were also abnormally amplified by the AGC amplifier, causing such problem as to deteriorate signal detection performance by detection errors due to inability to set an optimum level for signal detection as a result of too large or too small amplitudes of the regenerated signals.

## SUMMARY OF THE INVENTION

This invention has been achieved to solve the problems as stated above. The purpose of this invention is to provide a signal processing circuit for preventing amplitudes of the regenerated signals at the header and the following data from being amplified abnormally when the amplitudes of the regenerated signals at the header are out of a prescribed allowable range.

The above and further objects and features of the invention will more fully be apparent from the following detailed description with accompanying drawings.

## BRIEF DESCRIPTION OF THE DRAWINGS

Fig. 1 is a graph showing amplitudes of the regenerated signals at the header and the add-on data from inside to outside circumference of the recording medium;

Fig. 2 is a conception drawing showing composition of a sector recording format;

Figs. 3 and 4 are waveform charts indicating examples of the regenerated signals at inside and outside circumferences of the recording medium;

Fig. 5 is a block diagram showing composition of a conventional signal processing circuit;

Fig. 6 is a waveform chart showing the regenerated signals at various positions of the signal processing cir cuit described in Fig. 5;

Fig. 7 is a block diagram indicating an applied case of this invention;

Fig. 8 is a timing chart between the AGC control signal and set attenuation; and

Fig. 9 is a waveform chart showing the regenerated signals at various positions of the signal processing circuit described in Fig. 8.

## DESCRIPTION OF THE PREFERRED EMBODIMENTS

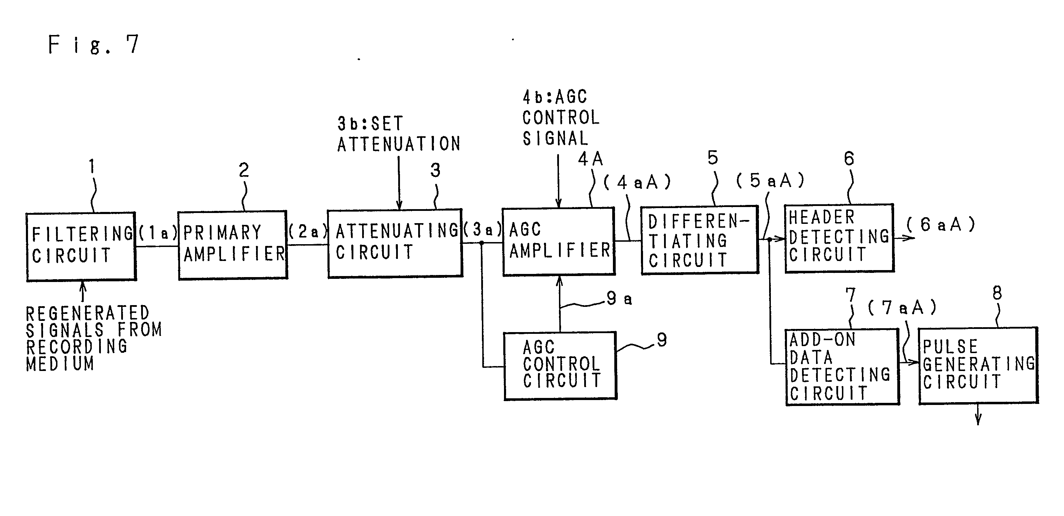

Fig. 7 is the block diagram showing an applied case of this invention, where 1 and 5 through 8 are identical with those in the conventional circuit. In the diagram, 2 is a primary amplifier to adjust amplitudes of the outputs 1a from the filtering circuit 1 where noise in the regenerated analog signals outputted from the recording medium is excluded, 3 is an attenuating circuit to set attenuation at the header A and add-on data of the output 2a from this primary amplifier 2, 4A is an AGC amplifier to make amplitudes of the signals at the header A of the output 3a from the attenuating circuit 3 be a prescribed constant value, and 9 is an AGC control circuit to actuate the AGC amplifier 4A only when amplitudes of the regenerated signals at the header A, which become the reference signal for applying automatic gain control, are within a prescribed range.

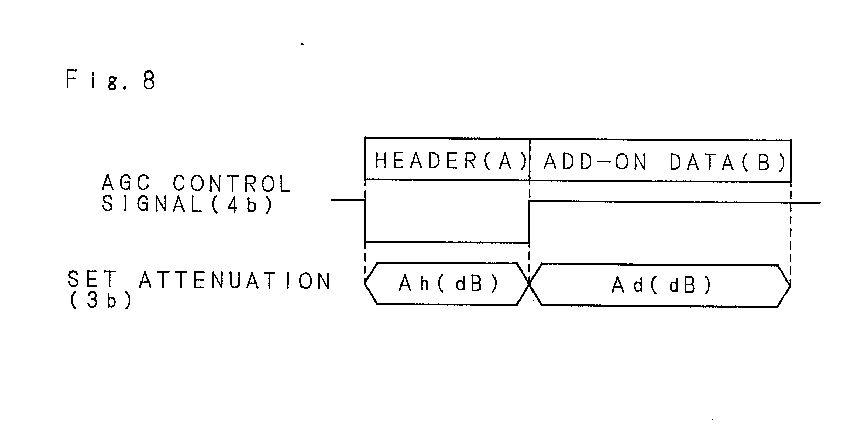

Then, movement of the signal processing circuit relevant to this invention will be explained hereinafter. The regenerated signal from the recording medium is inputted to the filtering circuit 1, where noise components in frequency out of a required band are excluded. The output signals 1a from this filtering circuit 1 are then inputted to the primary amplifier 2 in the next stage, where they are adjusted to be amplitudes within a prescribed range. The outputs 2a from this primary amplifier 2 are then inputted to the attenuating circuit 3 in the next stage. At the attenuating circuit 3 has been set in advance at such a prescribed attenuation 3b as ratio between amplitudes of the regenerated signals at the header A and at the add-on data B will be the optimum value for signal detection. Set attenuation 3b as shown in Fig. 8, is set for instance Ah (dB) at the header A and Ad (dB) at the add-on data B, through which ratio between the signal amplitudes at the header A and the add-on data B can be set at a prescribed value. As shown in Figs. 3 and 4, the header A is generally not subject to waveform interference since its recording density is sparse, and as indicated in Fig. 1, its signal amplitudes are constant from inside to outside circumferences of the recording medium. On the other hand, signal amplitudes of the maximum frequency component at the add-on data B become smaller on the inside circumference as a result of waveform interference since the recording density on the inside circumference is high, but become constant from the middle to the outside circumference. On this account, as indicated in Fig. 8, the ratio between the attenuation Ah (dB) at the header A and that Ad (dB) at the add-on data B of the set attenuation 3b at the attenuating circuit 3 is set to be most suitable for signal detection, according to regenerating track address.

Now, reverting to Fig. 7, the output 3a from the attenuating circuit 3 is inputted to the AGC amplifier 4A in the next stage. This AGC amplifier 4A is automatically set of its amplification rate so that a peak-to-peak amplitude of its waveform is constant by sampling signal amplitudes at the header A as a result of the AGC control signal 4b. As indicated in Fig. 8, the AGC control signal 4b is inputted to the AGC amplifier 4A in order that gain is controlled by the AGC amplifier 4A only at the header A (consequently not controlled at the add-on data B) and that the last gain at the header A will be maintained. The AGC control signal 4b is for instance low at the header A and high at the add-on data B. Further, as shown in Fig. 7, the outputs 3a are inputted also to the control circuit 9, where the amplitudes of the regenerated signals at the header being judged whether they are within a prescribed allowable range and the AGC amplifier 4A is actuated for automatic gain control only when they are within the prescribed allowable range, but is not actuated when they are out of the prescribed allowable range. (When not to allow AGC actuation, the gain, for instance, is set at 1.) AGC actuation or non-actuation of the AGC amplifier 4A is controlled by an output 9a from the AGC control circuit 9. The outputs 4aA from the AGC amplifier 4A are inputted to the differentiating circuit 5 in the next stage and differentiated. The outputs 5aA from this differentiating circuit 5 are inputted to the header detecting circuit 6 in the next stage to be detected of both edges of the waveform, the data points at the header A. Further, the outputs 5aA from the differentiating circuit 5 are also inputted to the add-on data detecting circuit 7, where peaks of the waveform, the data points at the add-on data B, are detected. The outputs 7aA from the add-on data detecting circuit 7 is inputted to the pulse generating circuit 8 in the next stage, where the spurious pulses due to noise in the outputs 7aA are excluded.

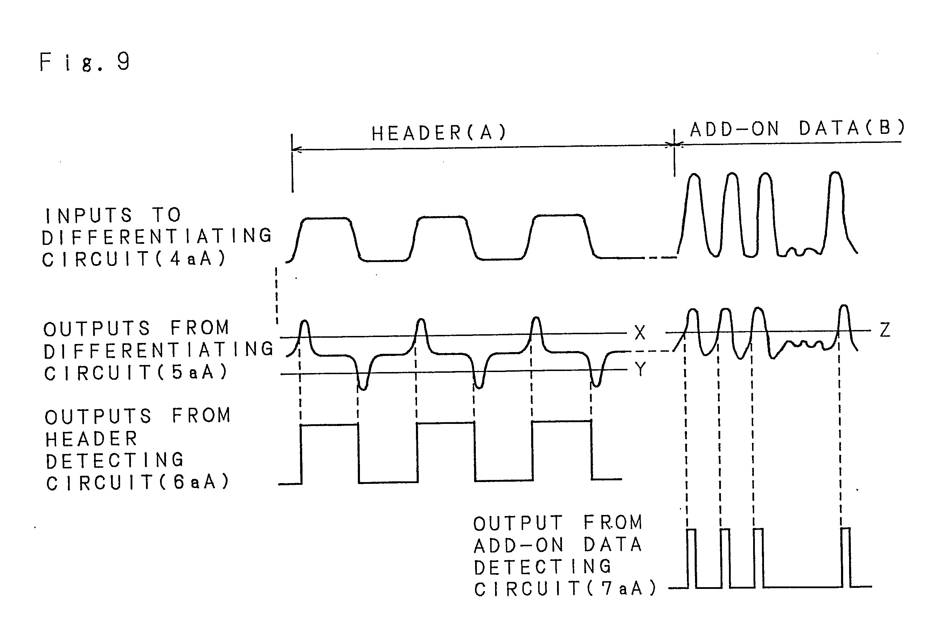

The processes of signal detection at the aforesaid header A and the add-on data B will be explained hereinafter according to Fig. 9. The differentiating circuit 5 differentiates the inputs 4aA, which are the regenerated signals at the header A, and generates outputs 5aA in positive or negative pulses from points corresponding to both edges of the waveform, i.e., data points of the inputs 4aA. These outputs are compared with the first comparative level X and the second comparative level Y of the header detecting circuit 6 to make them digital outputs 6aA having both edges of the regenerated signal waveform at the header A as data points indicated as the outputs 6aA from the header detecting circuit 6. On the other hand, the inputs 4aA to the differentiating circuit 5, which are the regenerated signals at the add-on data B, are differentiated in the differentiating circuit 5 and take a waveform like the outputs 5aA indicated in the figure. The outputs 5aA are then compared with a comparative level Z of the add-on data detecting circuit 7 in the next stage and make them digital outputs 7aA having peaks of the regenerated signal waveform at the add-on data B as the data points.

For understanding this invention more easily, an explanation comparing this invention with a conventional circuit will follow. For example, we assume a case where amplitudes of the regenerated signals at the header from the recording medium are extremely smaller than those at the add-on data due to a defect in the recording medium.

When these regenerated signals are inputted to the conventional signal processing circuit shown in Fig. 5, gain at the AGC amplifier 4 increases extremely as amplitudes of the inputs 1a at the header A are extremely small. Consequently, amplitudes of the regenerated signals at the add-on data B of the outputs 4a from the AGC amplifier 4 increase ex tremely. Therefore, as indicated in Fig. 6, noise level reaches the comparative level Z of the add-on data detecting circuit 7 and as a result, the noise as shown by a dotted line is detected.

In contrast to this, when the regenerated signals are inputted in the signal processing circuit of this invention, as amplitudes at the header A of the inputs 3a to the AGC amplifier 4A are extremely small, the AGC control circuit 9 judges them to be out of the prescribed range and the AGC control circuit does not actuate the AGC amplifier 4, but sets the gain at a lower value (for instance, 1). In consequence, as indicated in Fig. 9, the amplitudes at the add-on data B of the outputs 4aA from the AGC amplifier 4A do not increase too much and noise level does not reach the comparative level Z of the add-on data detecting circuit 7, which ensures a highly reliable detection without detecting any noise.

As this invention may be embodied in several forms without departing from the spirit of essential characteristics thereof, the present embodiment is therefore illustrative and not restrictive, since the scope of the invention is defined by the appended claims rather than by the description preceding them, and all changes that fall within the meets and bounds of the claims, or equivalence of such meets and bounds thereof are therefore intended to be em braced by the claims.

## Claims

1. A signal processing circuit for converting analog signals of regenerated data including a header for the following data into pulse signals comprising:
means for sampling amplitudes of the regenerated signals at the header;
means for judging whether said sampled amplitudes are within a prescribed range or not;
an amplifier for amplifying amplitudes of regenerated data by such a gain as to make a peak-to-peak amplitude of said sampled amplitudes be a fixed value; and
means for giving a control signal to said amplifier to amplify the amplitudes of the regenerated signals by said gain only when said sampled amplitudes of the regenerated signals are judged to be within the prescribed range.

2. A signal processing circuit as set forth in Claim 1, wherein said gain is set at 1 when the amplitudes of the regenerated signals at the header are out of the prescribed range.

Fig. 1

Fig. 2

HEADER(A) | ADD-ON DATA(B)

| SECTOR MARK | ADDRESS | FLAG | PREAMBLE | DATA |

11    12    13    14    15

## Fig. 3

HEADER(A)    ADD-ON DATA(B)

VOLTAGE

TIME

## Fig. 4

HEADER(A)    ADD-ON DATA(B)

VOLTAGE

TIME

EP 0 369 472 A2

Fig. 5
Prior Art

REGENERATED SIGNALS FROM RECORDING MEDIUM →

FILTERING CIRCUIT `1` (1a) → AGC AMPLIFIER `4` (4a) → DIFFEREN-TIATING CIRCUIT `5` (5a) → HEADER DETECTING CIRCUIT `6` → (6a)

ADD-ON DATA DETECTING CIRCUIT `7` (7a) → PULSE GENERATING CIRCUIT `8`

EP 0 369 472 A2

Fig. 6

ADD-ON DATA(B)

HEADER(A)

INPUTS TO
DIFFERENTIATING
CIRCUIT(4a)

OUTPUTS FROM
DIFFERENTIATING
CIRCUIT(5a)

X

Y

Z

OUTPUTS FROM
HEADER
DETECTING
CIRCUIT(6a)

OUTPUT FROM
ADD-ON DATA
DETECTING
CIRCUIT(7a)

EP 0 369 472 A2

Fig. 7

Fig. 8

AGC CONTROL
SIGNAL(4b)

SET ATTENUATION
(3b)

| | HEADER(A) | ADD-ON DATA(B) |

Ah(dB)    Ad(dB)

EP 0 369 472 A2

Fig. 9

HEADER(A)                          ADD-ON DATA(B)

INPUTS TO
DIFFERENTIATING
CIRCUIT(4aA)

OUTPUTS FROM
DIFFERENTIATING
CIRCUIT(5aA)

OUTPUTS FROM
HEADER
DETECTING
CIRCUIT(6aA)

OUTPUT FROM
ADD-ON DATA
DETECTING
CIRCUIT(7aA)

X

Y

Z

EP 0 369 472 A2